Europäisches Patentamt

European Patent Office

Office européen des brevets

(19)

(11) **EP 1 142 299 B1**

(12) **EUROPÄISCHE PATENTSCHRIFT**

(45) Veröffentlichungstag und Bekanntmachung des Hinweises auf die Patenterteilung:
**19.02.2003 Patentblatt 2003/08**

(21) Anmeldenummer: **99962264.0**

(22) Anmeldetag: **21.12.1999**

(51) Int Cl.$^7$: **H04N 1/40**

(86) Internationale Anmeldenummer:
**PCT/EP99/10247**

(87) Internationale Veröffentlichungsnummer:
**WO 00/038406 (29.06.2000 Gazette 2000/26)**

(54) **MIT MINDESTENS DREI HELLIGKEITSSTUFEN ARBEITENDE DRUCKVORRICHTUNG SOWIE DAMIT AUSZUFÜHRENDE VERFAHREN ZUM FESTLEGEN VON DRUCKPARAMETERN**

PRINTING DEVICES WHICH OPERATES WITH AT LEAST THREE BRIGHTNESS STEPS AND METHODS TO BE EXECUTED THEREWITH FOR DETERMINING PRINTING PARAMETERS

DISPOSITIF D'IMPRESSION FONCTIONNANT AVEC AU MOINS TROIS ECHELONS DE BRILLANCE ET PROCEDE A METTRE EN OEUVRE POUR FIXER DES PARAMETRES D'IMPRESSION

(84) Benannte Vertragsstaaten:
**BE DE FR GB**

(30) Priorität: **21.12.1998 DE 19859140**

(43) Veröffentlichungstag der Anmeldung:
**10.10.2001 Patentblatt 2001/41**

(73) Patentinhaber: **Océ Printing Systems GmbH**
**85586 Poing (DE)**

(72) Erfinder:
• **MAESS, Volkhard**
**D-85435 Erding (DE)**
• **SCHLEUSENER, Martin**
**D-85604 Zorneding (DE)**

(74) Vertreter: **Schaumburg, Thoenes & Thurn**
**Postfach 86 07 48**
**81634 München (DE)**

(56) Entgegenhaltungen:
**EP-A- 0 858 205          US-A- 5 877 846**

**Beschreibung**

Die Erfindung betrifft ein Verfahren zum Betreiben eines elektrofotografischen Druck- oder Kopiergeräts sowie Druckvorrichtungen zum Durchführen der Verfahren.

Bekannt ist aus der US-Patentschrift 5,767,888 ein Verfahren, bei dem ein optischer Zeichengenerator auf einem Fotoleiter mittels mindestens einer Lichtquelle ein Ladungsbild aus einer Vielzahl von Ladungsbereichen erzeugt. Die Größe und Form der Ladungsbereiche wird durch die von der Lichtquelle abgestrahlte Belichtungsenergie beeinflußt. Aus den Druckdaten eines Druckbildes werden Lichtcodierdaten erzeugt, die jeweils einen von mindestens drei unterschiedlichen Lichtcodierwerten enthalten und die dann zum Ansteuern der Lichtquelle verwendet werden.

Mit mehr als zwei Lichtcodierwerten angesteuerte Zeichengeneratoren werden im Gegensatz zu herkömmlichen Bilevel-Zeichengeneratoren als Multilevel-Zeichengeneratoren bezeichnet und enthalten z.B. eine LED-Zeile oder einen Mehrebenen-Laser. Bei Multilevel-Zeichengeneratoren gibt es zwar mehr als zwei Lichtcodierwerte, letztlich aber nur bedruckte oder unbedruckte Flächen. Multilevel-Zeichengeneratoren bieten jedoch im Vergleich zu Bilevel-Zeichengeneratoren die Möglichkeit, die Größe und Ausformung der Ladungsbereiche gezielt festzulegen, um den Eindruck verschiedener Grauwerte bei einem Betrachter des entwickelten Ladungsbildes zu erzeugen. Ein derartiger Multilevel-Zeichengenerator ist in der US-Patentschrift 5,767,888 erläutert, die Teil der Offenbarung dieser Anmeldung ist.

Nachteilig am bekannten Druck mit Multilevel-Zeichengeneratoren ist, daß die Druckqualität bei sich verändernden Druckbedingungen nachläßt. Zu diesen Druckbedingungen zählt beispielsweise das Alter des Fotoleiters und die Qualität des Toners bzw. Entwicklers. Für Drucker mit Bilevel-Zeichengeneratoren werden Verfahren verwendet, mit denen sich auch bei veränderten Druckbedingungen Druckbilder guter Qualität drukken lassen, vgl. z.B. das in der WO 97/37285 erläuterte Verfahren. Die für Druckgeräte mit Bilevel-Zeichengenerator noch hinreichende Qualität genügt jedoch nicht in jedem Fall den wesentlich höher liegenden Anforderungen und Möglichkeiten, die sich beim Verwenden eines Multilevel-Zeichengenerators ergeben.

Weitere Verfahren zum Betreiben eines elektrografischen Druck- oder Kopiergerätes sind aus den Druckschriften US 5,694,223; WO 97/37285; DE 43 43 274 A1; US 5,734,948 und US 5,241,347 bekannt.

Es ist Aufgabe der Erfindung, zum Betreiben eines elektrofotografischen Druck- bzw. Kopiergeräts mit Multilevel-Zeichengenerator ein Verfahren anzugeben, bei dem auch bei sich ändernden Druckbedingungen Druckbilder mit hoher Druckqualität gedruckt werden. Außerdem sollen Druckvorrichtungen angegeben werden, mit denen solch ein Verfahren ausgeführt werden kann.

Diese Aufgabe wird durch ein Verfahren mit den im Patentanspruch 1 angegebenen Verfahrensschritten und durch eine Vorrichtung gemäß Anspruch 16 gelöst. Weiterbildungen sind in den abhängigen Ansprüchen angegeben.

Die Erfindung geht von der Überlegung aus, daß ein Multilevel-Zeichengenerator aufgrund der Vielzahl unterschiedlicher Belichtungsenergiewerte eine hohe Druckqualität ermöglicht. Die unterschiedlichen Belichtungsenergiewerte können aber auch dazu genutzt werden, den Druckvorgang auf andere Weise als bisher zu beeinflussen. Deshalb werden beim erfindungsgemäßen Verfahren in einem Abgleichsvorgang korrigierte Belichtungsenergiewerte ermittelt, die jeweils zu einem Lichtcodierwert gehören. Durch das Verwenden der korrigierten Belichtungsenergiewerte ergeben sich beim erfindungsgemäßen Verfahren neue Freiheitsgrade, um den Druckvorgang zu beeinflussen.

Das erfindungsgemäße Verfahren geht außerdem von der Erkenntnis aus, daß eine den Zusammenhang von Lichtcodierwerten und Tonerablagerung angebende Druckkennlinie für den gesamten Druckvorgang im wesentlichen durch eine Fotoleiter-Entladungskennlinie des Fotoleiter-Entladungsprozesses und durch eine Entwicklungskennlinie für den elektrofotografischen Entwicklungsprozeß bestimmt wird. Die Entladungskennlinie gibt den Zusammenhang von Belichtungsenergie und Potential auf dem Fotoleiter an, und die Entwicklungskennlinie gibt den Zusammenhang von Potential auf dem Fotoleiter und Tonerablagerung an. Beispiele für diese Kennlinien sind in der bereits erwähnten US-Patentschrift 5,767,888 erläutert. Neben der aktuellen Entladungskennlinie sollte auch die aktuelle Entwicklungskennlinie zum Erzielen einer vorgegebenen Druckkennlinie durch die Wahl geeigneter korrigierter Belichtungsenergiewerte berücksichtigt werden.

Die korrigierten Belichtungsenergiewerte werden beim erfindungsgemäßen Verfahren so festgelegt, daß die Druckkennlinie auch bei Abweichungen der aktuellen Fotoleiter-Entladungskennlinie und einer Bezugs-Fotoleiter-Entladungskennlinie einen vorgegebenen Verlauf hat. Die Bezugskennlinien sind beispielsweise kurz nach der Herstellung des Druckers gegeben. Die Druckkennlinie wird so vorgegeben, daß sich ein Druckbild mit hoher Qualität ergibt.

Die Entladungskennlinie und/oder die Entwicklungskennlinie werden in einer Weiterbildung durch die Veränderung von Druckparametern so beeinflußt, daß der vorgegebene Verlauf der Druckkennlinie auch erreicht wird, wenn Zusatzbedingungen die freie Wahl der korrigierten Belichtungsenergiewerte beschränken.

Verändert sich während der Lebensdauer des Druckers bzw. Kopierers im wesentlichen nur die Entladungskennlinie des Fotoleiters, so genügt es, vorrangig deren Einfluß auf den Druckvorgang zu berücksichtigen. Beim erfindungsgemäßen Verfahren wird die zum Zeitpunkt des Druckens vorhandene Entladungskennlinie berücksichtigt, um die korrigierten Belichtungsenergien für die Lichtcodierwerte so zu ermitteln, daß der Einfluß von Veränderungen

EP 1 142 299 B1

der Entladungskennlinie auf den Druckvorgang ausgeglichen wird.

In Weiterbildungen der erfindungsgemäßen Verfahren werden Korrekturparameter ermittelt, die aufgrund der nicht linearen Entladungskennlinie voneinander abweichende Werte haben und ein Maß für die Abweichung der derzeitigen Entladungskennlinie von einer Soll-Entladungskennlinie des Fotoleiters bei einem Potential sind, das gemäß der Soll-Entladungskennlinie zu dem den jeweiligen Lichtcodierwert zugeordneten Bezugs-Belichtungsenergiewert gehört. Beispielsweise durch Multiplikation der Bezugs-Belichtungsenergiewerte mit dem jeweiligen Korrekturparameter werden dann die korrigierten Belichtungsenergien berechnet.

In einer Weiterbildung der Verfahren nach dem ersten oder zweiten Aspekt der Erfindung wird die Entladungskennlinie vollständig oder punktuell erfaßt. Dies erfolgt durch Messungen am Fotoleiter. Beispielsweise wird neben der Temperatur des Fotoleiters ein sich bei einer vorgegebenen Belichtungsenergie einstellendes Entladepotential erfaßt. Danach können Parameter in einer Kennliniengleichung bestimmt werden, welche den zum Zeitpunkt des Drucks vorhandenen Verlauf der Kennlinie des Fotoleiters annähernd wiedergibt. Andererseits können aber auch mehrere Punkte der Belichtungskennlinie erfaßt werden, zwischen denen die Kennlinie interpoliert wird. Bei der Weiterbildung ist für jeden Lichtcodierwert ein Fotoleiterpotential vorgegeben, das bei dem jeweiligen Lichtcodierwert auf dem Fotoleiter entstehen soll. Für jeden Lichtcodierwert wird mit Hilfe des vorgegebenen Potentials und der Entladungskennlinie eine korrigierte Belichtungsenergie ermittelt.

In einer anderen Weiterbildung wird ebenfalls die Entladungskennlinie ermittelt. Jedoch werden Fotoleiterpotentiale nicht für alle Lichtcodierwerte vorgegeben, sondern beispielsweise nur für einen Lichtcodierwert. Nur für diesen Lichtcodierwert wird dann aus der Belichtungskennlinie die korrigierte Belichtungsenergie bzw. der Korrekturfaktor bestimmt. Die anderen korrigierten Belichtungsenergiewerte bzw. Korrekturfaktoren für die anderen Lichtcodierwerte werden durch Näherungen ermittelt, die beispielsweise schon in Tabellen gespeichert sind. Dieses Verfahren ist schnell und einfach ausführbar.

Bei einer anderen Weiterbildung der erfindungsgemäßen Verfahren wird die Entladungskennlinie in mindestens einem Regeloder Steuervorgang berücksichtigt. Der jeweilige Korrekturparameter wird so ermittelt, daß ein für den Lichtcodierwert vorgegebenes Potential bzw. ein in der Nähe dieses Potentials liegendes Potential auf dem Fotoleiter bei einer Belichtung gemäß Lichtcodierwert und zugehörigem Korrekturparameter entsteht. Als Regelverfahren wird beispielsweise ein Verfahren mit einem PID-Regler (proportional, integral, differenzierend arbeitender Regler) verwendet. Beim Verwenden eines Regel- bzw. Steuerverfahrens muß keine Näherung für die Kennlinie vorgegeben werden.

In einer Weiterbildung des Verfahrens nach dem zweiten Aspekt wird ebenfalls eine Entwicklungskennlinie beim Festlegen der korrigierten Belichtungsenergiewerte bzw. der Korrekturparameter und/oder weiterer Druckparameter berücksichtigt. Durch diese Maßnahme werden neben den aktuellen Bedingungen des Belichtungs- bzw. Entladungsprozesses auch diejenigen des Entwicklungsprozesses beim Festlegen der Korrekturparameter berücksichtigt.

Die Entwicklungskennlinie wird in einer Weiterbildung der erfindungsgemäßen Verfahren unter Verwendung der korrigierten Belichtungsenergien ermittelt. Zum Ermitteln der Entwicklungskennlinie werden Tonermarken, vorzugsweise Raster-Tonermarken verwendet. Das Verwenden von Raster-Tonermarken, bei denen ein Tonerbereich schachbrettartig oder streifenartig tonerfreie bzw. tonerbedeckte Bereiche hat, gewährleistet, daß auch die Darstellung von Bilddetails berücksichtigt wird.

Der Abgleichsvorgang wird automatisch durchgeführt, vorzugsweise nach dem Einschalten eines Druck- bzw. Kopiergerätes, nach längeren Druckpausen, nach längerem Druckbetrieb und/oder auf Anforderungen einer Bedienperson hin. Gerade zu diesen Zeitpunkten ist davon auszugehen, daß sich die Druckbedingungen geändert haben.

Die Erfindung betrifft außerdem Druck- bzw. Kopiervorrichtungen, mit denen die erfindungsgemäßen Verfahren bzw. deren Weiterbildungen ausgeführt werden können. Somit gelten die oben genannten technischen Wirkungen auch für die Druckvorrichtungen.

Ausführungsbeispiele der Erfindung werden im folgenden an Hand der beiliegenden Zeichnungen erläutert. Darin zeigen:

Figur 1     eine Prinzipdarstellung eines Druckvorgangs,

Figur 2     ein Potential-Belichtungsenergie-Diagramm,

Figur 3     eine Umwandlungs- und Korrektureinheit,

Figur 4     Gleichungen für die Näherung einer Fotoleiterkennlinie,

Figur 5     ein weiteres Potential-Belichtungsenergie-Diagramm, und

Figur 6     ein Vier-Quadranten Diagramm mit Kennlinien des Druckvorgangs.

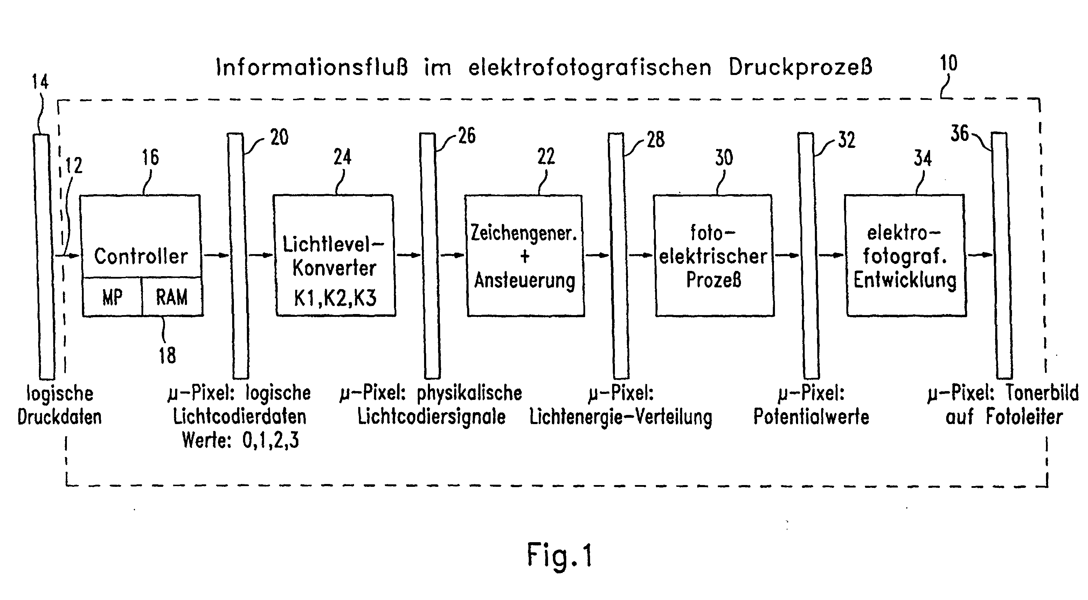

Figur 1 zeigt eine Prinzipdarstellung eines Druckvorgangs sowie den Informationsfluß beim Drucken in einem elektrofotografischen Druck- oder Kopiergerät 10. Im Druckgerät 10 werden über eine elektronische Schnittstelle 12 Druckdaten 14 eingegeben, die ein Druckbild z.B. gemäß dem bekannten Postscript-Format definieren. Eine Druckdateneinheit 16 enthält einen Mikroprozessor MP, der ein in einem Speicher 18 gespeichertes Umwandlungsprogramm abarbeitet. Die Druckdateneinheit 16 erzeugt aus den Druckdaten 14 Lichtcodierdaten 20 für die einzelnen LED's (Light Emitting Diode) eines Zeichengenerators 22. Das Lichtcodierdatum für eine LED ist in zwei Bits eines Datenwortes gespeichert. Somit gibt es vier Lichtcodierwerte LCW mit den Werten 0, 1, 2 und 3. Beim Lichtcodierwert LCW=0 wird nicht belichtet. Beim Lichtcodierwert LCW=1 wird so belichtet, daß unter Bezugs-Druckbedingungen in einem durch die Bezugs-Druckbedingungen gekennzeichneten Bezugsdruckvorgang eine Bezugs-Belichtungsenergie HB1 von der jeweiligen LED ausgestrahlt wird. Der Lichtcodierwert LCW=2 bzw. LCW=3 führt beim Bezugsdruckvorgang zu Bezugs-Belichtungsenergien HB2 bzw. HB3.

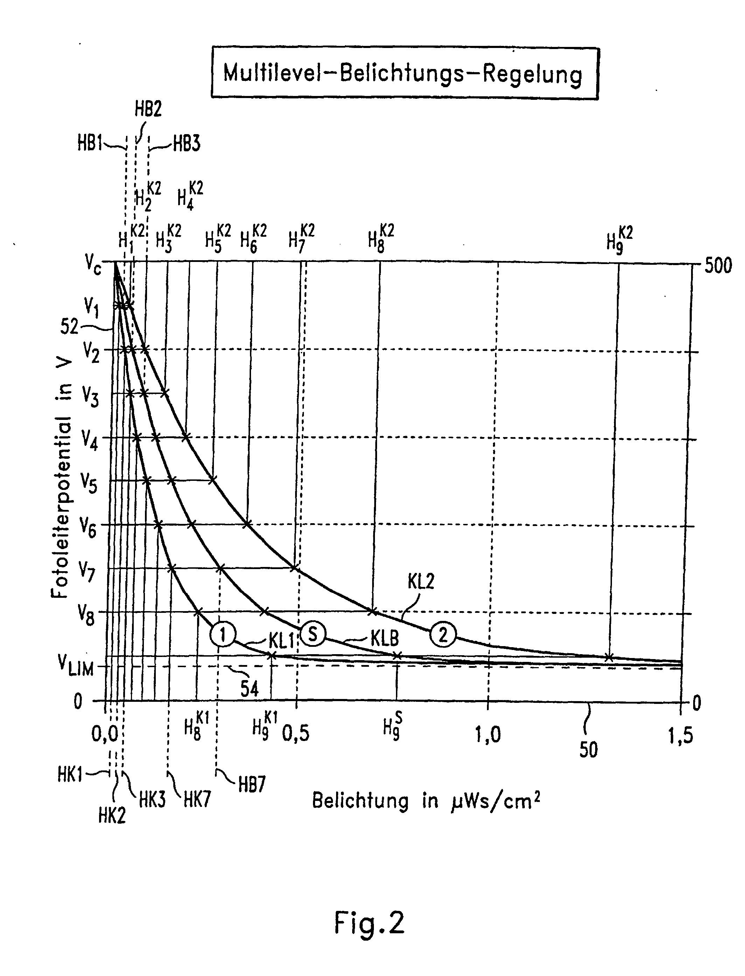

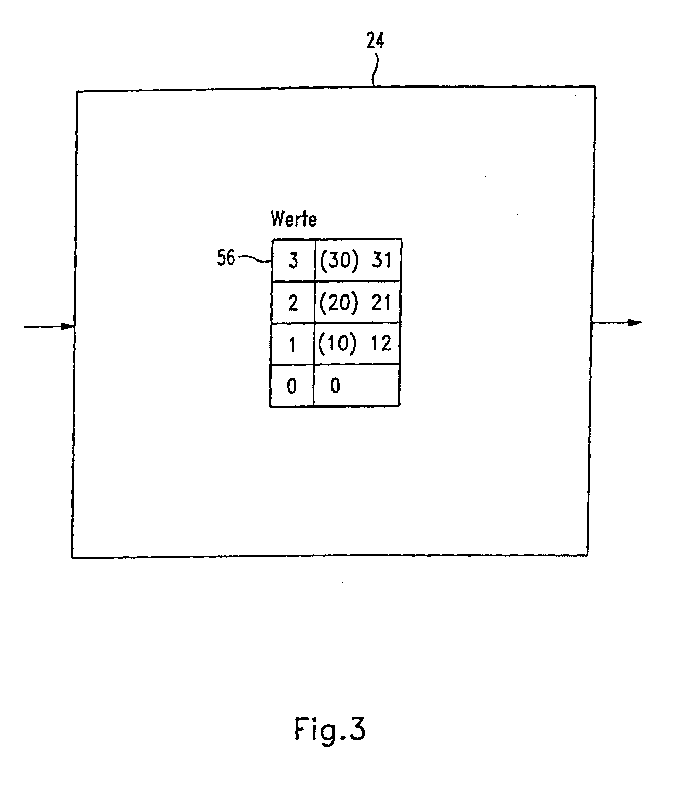

Die Lichtcodierdaten 20 werden in einer Umwandlungs- und Korrektureinheit 24 bearbeitet, die unten an Hand der Figur 3 näher erläutert wird. Vor Beginn des Drucks wurden in der Umwandlungs- und Korrektureinheit 24 drei Korrekturfaktoren K1, K2 und K3 ermittelt. Beispielsweise werden die Korrekturfaktoren K1, K2 und K3 nach jedem Einschalten des Drukkers und/oder nach längerem Druck bzw. nach längerem Druckbetrieb automatisch ermittelt. Die dabei ausgeführten Verfahrensschritte werden unten an Hand der Figur 2 näher erläutert. In der Umwandlungs- und Korrektureinheit 24 wird abhängig vom Lichtcodierwert der Lichtcodierdaten ein Lichtcodiersignal 26 bestimmt. Beim Lichtcodierwert LCW=0 wird ein Lichtcodiersignal 26 erzeugt, das zu keiner Belichtung durch die betreffende LED führt. Beim Lichtcodierwert LCW=1 wird unter Berücksichtigung des Korrekturfaktors K1 ein Lichtcodiersignal 26 erzeugt, das eine Belichtung mit einer korrigierten Belichtungsenergie HK1 bewirkt. Beim Lichtcodierwert LCW=2 bzw. LCW=3 wird unter Berücksichtigung des Korrekturfaktors K2 bzw. K3 ein Lichtcodiersignal 26 erzeugt, das zu einer Belichtung mit einer korrigierten Belichtungsenergie HK2 bzw. HK3 führt.

Die Lichtcodiersignale 26 werden zur Ansteuerung des Zeichengenerators 22 verwendet. Der Zeichengenerator 22 enthält eine Ansteuerschaltung für die LED's einer LED-Zeile (nicht dargestellt), bei der benachbarte LED's einen Abstand von etwa 42 µm zueinander haben. Makrozellen werden jeweils durch drei in Reihe angeordnete LED's beim Belichten dreier aufeinanderfolgenden Zeilen erzeugt. Von den LED's einer Makrozelle abgestrahlte Lichtenergieverteilungen 28 überlagern sich teilweise. Bei geeigneter Wahl der Lichtcodierwerte entstehen innerhalb einer Rasterzelle Lichtverteilungsgebirge unterschiedlicher Lichtintensität, die auf einem Fotoleiter 30 zu einer der jeweiligen Lichtverteilung ähnlichen Potentialverteilung 32 führen. Durch das Festlegen einer Potentialschwelle in einer Entwicklungseinheit 34 wird erreicht, daß sich in den Makrozellen Tonerbereiche 36 mit unterschiedlichem, von der jeweiligen Potentialverteilung bestimmten, Durchmesser bilden. Auf einfache Art und Weise wird durch das Verwenden der Lichtcodierwerte so ein Halbtonbild erzeugt. Diese Verfahren sind ausführlich in der US-Patentschrift 5,767,888 erläutert, die Bestandteil der Offenbarung der vorliegenden Anmeldung ist.

Fig. 2 zeigt ein Potential-Belichtungsenergie-Diagramm, auf dessen Abszissenachse 50 die Belichtungsenergie in $\mu Ws/cm^2$ und auf dessen Ordinatenachse 52 das Fotoleiter-Potential in Volt abgetragen sind. Der Fotoleiter wird vor Beginn der Belichtung jeweils auf ein Aufladepotential VC von 500 V aufgeladen. Eine Bezugskennlinie KLB zeigt den Zusammenhang von Potential auf dem Fotoleiter und Belichtungsenergie für einen Bezugsfotoleiter, der beim Bezugsdruckvorgang verwendet wird. Eine Kennlinie KL1 eines momentan zum Drucken verwendeten Fotoleiters weicht von der Bezugskennlinie KLB ab. Die Abweichungen der Kennlinien KLB und KL1 sind beispielsweise auf die Temperatur oder auf das Alter des Fotoleiters zurückzuführen. Abweichungen der Kennlinien KLB und KL1 treten jedoch auch bei einem Wechsel des Fotoleiters bzw. beim Vergleich der Fotoleiter zweier verschiedener Druckgeräte 10 auf. In diesem Fall haben fertigungsbedingte Schwankungen sowie die Qualität der Fotoleiter einen zusätzlichen Einfluß auf die Abweichung der Kennlinien KLB und KL1.

Eine weitere Kennlinie KL2 zeigt die Abhängigkeit des Potentials auf einem dritten Fotoleiter von der Belichtungsenergie. Qualitativ haben die Kennlinien KLB, KL1 und KL2 einen ähnlichen Verlauf, so daß im folgenden nur der Verlauf der Kennlinie KLB erläutert wird. Mit zunehmender Belichtungsenergie fallen die Potentialwerte auf dem Fotoleiter gemäß einer fallenden Exponentialfunktion ab, bis schließlich ein tiefstes erreichbares Entladepotential VLIM erreicht ist, dargestellt durch eine gestrichelte Linie 54.

Der Druckvorgang führt zu Druckbildern mit hoher Druckqualität, wenn die Potentiale, die beim Auftreten der verschiedenen Lichtcodierwerte LCW = 0, 1, 2 bzw. 3 erzeugt werden, etwa einen gleichmäßigen Abstand voneinander haben und über den gesamten zur Verfügung stehenden Entladebereich verteilt sind. Jedoch werden bei der folgenden Erläuterung nur Potentiale im oberen Bereich der Entladekurve berücksichtigt, um die Erläuterungen zu vereinfachen. Beim Lichtcodierwert LCW=1 soll beispielsweise das Potential V1 erzeugt werden. Beim Lichtcodierwert 2 bzw. 3 soll ein Potential V2 bzw. V3 erzeugt werden. Die Potentiale V1 bis V3 und die Bezugskennlinie KLB legen die Bezugs-Belichtungsenergien HB1 bis HB3 fest.

Das Ermitteln der Korrekturfaktoren K1 bis K3 erfolgt auf gleiche Art und Weise und wird im folgenden an Hand eines Korrekturfaktors K7 erläutert. Bei einem Lichtcodierwert LCW=7 soll ein Potential V7 auf dem Fotoleiter erzeugt werden. Dazu ist bei Verwenden eines Fotoleiters mit der Bezugskennlinie KLB eine Bezugs-Belichtungsenergie HB7 erforderlich. Beim Verwenden eines Fotoleiters mit der Kennlinie KL1 läßt sich zum Potential V7 aus der Kennlinie KL1 eine korrigierte Belichtungsenergie HK7 ermitteln. Teilt man die Bezugs-Belichtungsenergie HB7 durch die korrigierte Belichtungsenergie HK7 so ergibt sich ein Korrekturfaktor K7 mit einem Wert von etwa 0,6.

Der Korrekturfaktor K7 führt in der Umwandlungs- und Korrektureinheit 24 dazu, daß anstelle eines Lichtcodiersignals für die Bezugs-Belichtungsenergie HB7 ein Lichtcodiersignal für die korrigierte Belichtungsenergie HK7 erzeugt wird. Auch bei einem Fotoleiter mit im Vergleich zur Kennlinie KLB veränderter Kennlinie KL1 wird beim Lichtcodierwert 7 somit das Potential V7 erzeugt. Der Belichtungsprozeß und damit auch der gesamte Druckprozeß werden durch die Veränderung der Kennlinie des Fotoleiters nicht beeinflußt.

Auf ähnliche Weise ergeben sich Korrekturfaktoren K1' bis K9' für die Kennlinie KL2. Die Korrekturfaktoren K1' bis K9' haben jedoch Werte größer 1.

Figur 3 zeigt die Umwandlungs- und Korrektureinheit 24, die einen Speicher 56 enthält. Ein nicht dargestellter Mikroprozessor liest abhängig vom jeweils zu bearbeitenden Lichtcodierwert 0 bis 3 aus einer zugehörigen Speicherzelle Lichtstufenwerte. Im erläuterten Ausführungsbeispiel gibt es zu den vier Lichtcodierwerten 0 bis 3 32 Lichtstufen 0 bis 32, mit denen der Zeichengenerator 22 angesteuert werden kann. Ohne Korrekturfaktoren K1 bis K3 gehören zum Lichtcodierwert 0 der Lichtstufenwert 0, zum Lichtcodierwert 1 der Lichtstufenwert 10, zum Lichtcodierwert 2 der Lichtstufenwert 20 und zum Lichtcodierwert 3 ein Lichtstufenwert 30. Nach der Multiplikation des Korrekturfaktors K1 mit dem ursprünglich zum Lichtcodierwert 1 gehörenden Lichtstufenwert 10 ergibt sich ein Lichtstufenwert 12, der im Speicher 56 gespeichert wird. Aus dem Lichtstufenwert 20 wird durch Multiplikation mit dem Korrekturfaktor K2 der Lichtstufenwert 21. Aus dem Lichtcodierwert 3 wird durch Multiplikation mit dem Korrekturfaktor K3 der Lichtstufenwert 31. Beim Drucken werden dann durch die Umwandlungs- und Korrektureinheit 24 den Lichtcodierwerten 0, 1, 2 bzw. 3 die Lichtstufenwerte 0, 12, 21 bzw. 31 zugeordnet. Dadurch ergeben sich veränderte Lichtcodiersignale 26, die im Zeichengenerator 22 zum Abstrahlen veränderter Belichtungsenergien führen.

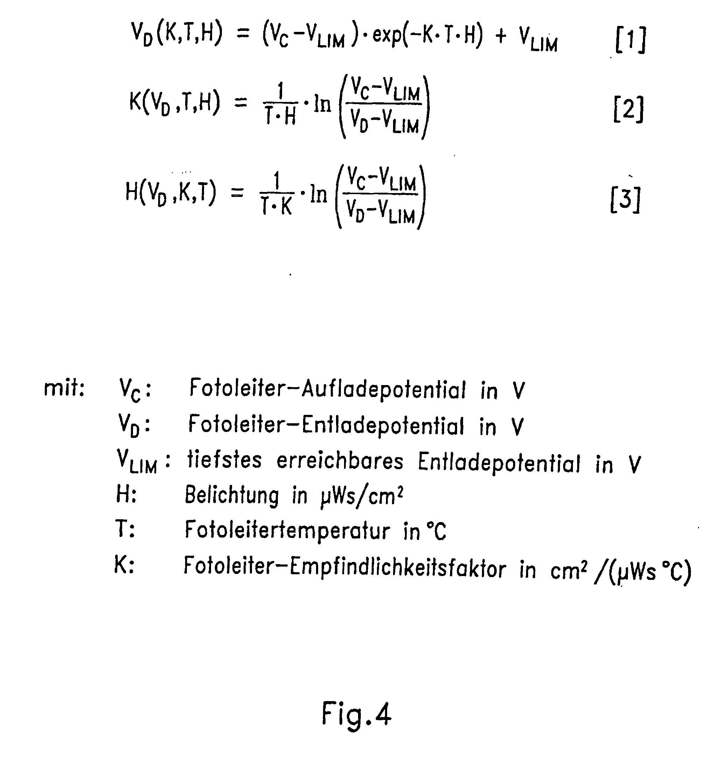

Figur 4 zeigt Formeln (1), (2) und (3), die beim Ermitteln der korrigierten Belichtungsenergien HK1, HK2 und HK3 verwendet werden. Diese Formeln (1), (2) und (3) werden im folgenden auch unter Bezugnahme auf die Figur 2 erläutert. Formel (1) lautet:

$$VD(K,T,H)=(VC-VLIM)\cdot\exp(-K\cdot T\cdot H)+VLIM, \tag{1}$$

wobei

VC        das Aufladepotential des Fotoleiters in Volt,
VD        das Entladepotential des Fotoleiters in Volt,
VLIM      das tiefste erreichbare Entladepotential in Volt,
H         die Belichtungsenergie in $\mu Ws/cm^2$,
T         die aktuell erfaßte Temperatur des Fotoleiters in °C,
K         die Fotoleiterklasse in $cm^2/(\mu Ws°C)$ und
exp       die Exponentialfunktion ist.

Die Formel (1) ist eine Näherung für die jeweilige Kennlinie des Fotoleiters. Die Kennlinien KLB, KL1 und KL2 in Figur 2 unterscheiden sich voneinander durch die Fotoleiterklasse K. Durch Umstellen der Formel (1) nach der Fotoleiterklasse K entsteht die Formel (2):

$$K(VD,T,H) = \frac{1}{T\cdot H}\ln\left(\frac{VC-VLIM}{VD-VLIM}\right), \tag{2}$$

wobei

$\ell$n     die Logarithmusfunktion ist.

Wird für die Belichtungsenergie H eine Standardbelichtungsenergie HS vorgegeben und nach Belichtung des Fotoleiters mit dieser Belichtungsenergie HS das entstehende Entladepotential VD sowie die Temperatur T des Fotoleiters erfaßt, so sind alle Größen auf der rechten Seite der Formel (2) bekannt und die Fotoleiterklasse K kann errechnet werden. Alternativ können Tabellen verwendet werden, in denen einmal für bestimmte Werte von VD, T und H berechnete Fotoleiterklassen K gespeichert sind.

Wird die Formel (1) nach der Belichtungsenergie H umgestellt, so ergibt sich die Formel (3):

$$H(VD, K, T) = \frac{1}{T \cdot K} \ell n \left( \frac{VC - VLIM}{VD - VLIM} \right), \qquad (3).$$

Nachdem die Fotoleiterklasse K ermittelt worden ist, lassen sich die korrigierten Belichtungsenergien HK1, HK2 und HK3 aus Formel (3) bestimmen, indem für das Entladepotential VD nacheinander die Potentiale V1, V2 und V3 eingesetzt werden. Danach werden die Korrekturfaktoren K1 bis K3 mittels Division ermittelt. Auch hierbei lassen sich vorbereitete Tabellen verwenden, um die Ermittlung der korrigierten Belichtungsenergien HK1, HK2 und HK3 schnell durchzuführen.

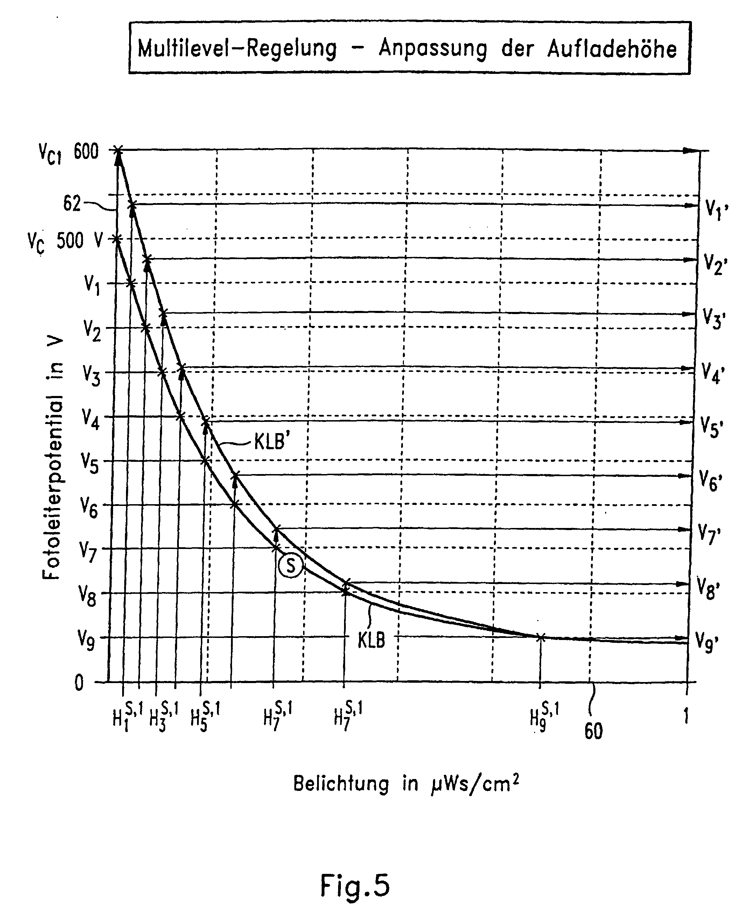

Figur 5 zeigt ein weiteres Potential-Belichtungsenergie-Diagramm, auf dessen Abszissenachse 60 die Belichtungsenergie in $\mu Ws/cm^2$ und auf dessen Ordinatenachse 62 das Fotoleiter-Potential in Volt abgetragen sind. Die Bezugskennlinie KLB wird durch die Vorgabe einer Bedienperson zu einer Bezugskennlinie KLB' verändert. Beispielsweise möchte die Bedienperson die sich beim Verwenden der Bezugskennlinie KLB ergebenden Standard-Einfärbungen der Makrozellen verändern bzw. korrigieren. Die Breite feiner Schriftzeichen, Linien und Punkte soll abweichend von der Breite bei einer Standard-Einfärbung erfolgen. Gemäß der Vorgabe der Bedienperson wird das Aufladepotential VC von 500 V auf ein Aufladepotential VC1 von 600 V angehoben. Anstelle der Potentiale V1, V2 und V3 werden Potentiale V1', V2' und V3' vorgegeben. Das Ermitteln der aktuellen Kennlinie KL1' des Fotoleiters erfolgt wie oben an Hand der Figur 2 erläutert. Danach werden die korrigierten Belichtungsenergien HK1', HK2' und HK3' ebenfalls nach dem oben erläuterten Verfahren ermittelt. Die Potentiale V1', V2' und V3' sind gegenüber den Potentialen V1, V2 und V3 zu höheren Potentialwerten hin verschoben. Bei einer Entwicklung der entladenen Fotoleiterbereiche (DAD - Discharge Area Development) bedeutet dies, daß die Schnittebenen der Potentialmulden mit der Entwicklungsschwelle eingeengt werden. Es entstehen feinere Druckelemente bzw. Tonerbereiche 36. Bei Rasterflächen bedeutet dies, daß der Rastertonwert abnimmt und somit die Rasterflächen heller werden. Werden dagegen die aufgeladenen Fotoleiterbereiche entwickelt, (CAD - Charged Area Development) so entstehen breitere Druckelemente. Bei einer Verringerung des Aufladepotentials VC entstehen jeweils die umgekehrten Wirkungen.

Die Einfärbeeigenschaften werden in einem anderen Ausführungsbeispiel zusätzlich zum Aufladepotential VC über die Entwicklungsschwelle geregelt, indem eine Hilfsspannung VBias der Entwicklerstation auf verschiedene Werte eingestellt wird. Ein Erhöhen der Hilfsspannung VBias der Entwicklerstation ergibt bei DAD breitere und Bei CAD feinere Druckelemente. Beim Absenken der Hilfsspannung VBias entstehen jeweils umgekehrte Wirkungen. Das Verändern der Hilfsspannung VBias bewirkt eine Veränderung der Entwicklungskennlinien, die den Zusammenhang von Fotoleiterpotential und Tonerablagerung angibt.

Bei schnellen Druckprozessen wird wie in den oben an Hand der Figuren 1 bis 5 erläuterten Ausführungsbeispielen nur der obere Abschnitt der Fotoleiterkennlinie verwendet, weil in diesem Abschnitt die vom Zeichengenerator zu erzeugenden Belichtungsenergien geringer sind und in kürzeren Zeiten abgestrahlt werden können. Der Fotoleiter kann deshalb schneller an den LED's des Zeichengenerators vorbeibewegt werden. Das Hilfspotential VBias in der Entwicklerstation muß dann deutlich über dem geringsten Fotoleiterpotential VLIM liegen.

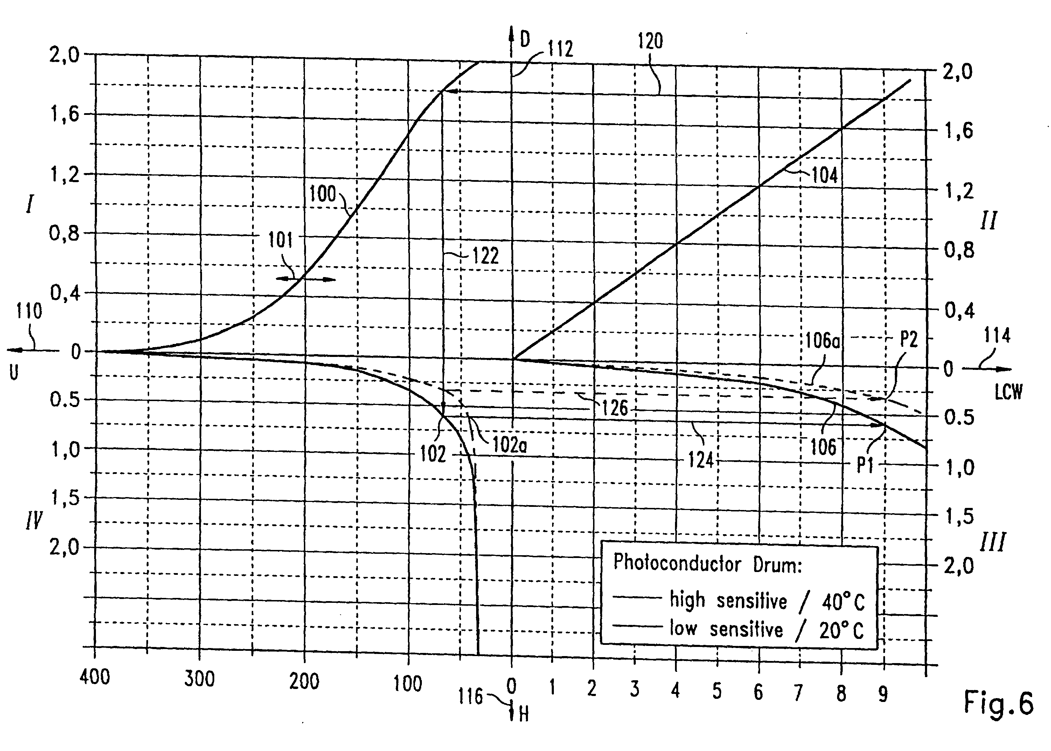

Figur 6 zeigt ein Vier-Quadranten-Diagramm mit Kennlinien 100, 102, 102a, 104, 106 und 106a des Druckvorgangs. Im linken oberen Quadranten I ist eine Entwicklungskennlinie 100 gezeigt, die den Zusammenhang des Potentials auf dem Fotoleiter und der Tonerablagerung nach dem Entwickeln angibt. Deshalb ist auf der Abszissenachse 110 des Quadranten I das Potential U des Fotoleiters abgetragen. Auf der Ordinatenachse 112 des Quadranten I ist die optische Dichte D abgetragen, die ein Maß für die Tonerablagerung ist. Die Entladungskennlinie 100 verschiebt sich beim Erhöhen bzw. Verringern der Tonerkonzentration in einem Zweikomponententoner in Richtung eines Doppelpfeils 101 nach links bzw. nach rechts. Im folgenden soll von einer gleichbleibenden Tonerkonzentration ausgegangen werden, zu der die Entwicklungskennlinie 100 gehört.

Im linken unteren Quadranten IV ist eine durchgezogene Entladungskennlinie 102 dargestellt, die den Zusammenhang von Belichtungsenergie H und Potential U auf dem Fotoleiter angibt. Auf einer Ordinatenachse 116 des Quadranten IV ist die Belichtungsenergie H abgetragen. Auf der Abszissenachse 110 des Quadranten IV ist das Potential U angegeben. Die Entladungskennlinie 102 gehört zu einem Fotoleiter mit der Temperatur 20°C. Der Verlauf der Entladungskennlinie 102 entspricht im wesentlichen dem Verlauf der an Hand der Figur 2 erläuterten Kennlinie KLB. Eine gestrichelt dargestellte Entladungskennlinie 102a gehört zu dem Fotoleiter bei einer Temperatur von 40°C. Die Entladungskennlinie 102a ist ebenfalls im Quadranten IV dargestellt.

Im rechten oberen Quadranten II ist eine Druckkennlinie 104 dargestellt, die einen vorgegebenen Zusammenhang von Lichtcodierwerten LCW und optischer Dichte D bzw. Tonerablagerung auf dem Fotoleiter angibt. Auf der Ordinatenachse 112 des Quadranten II ist die optische Dichte D angegeben. Auf einer Abszissenachse 114 des Quadranten II sind die Lichtcodierwerte LCW abgetragen. Der durch die Druckkennlinie 104 vorgegebene Zusammenhang ist vorzugsweise linear, so daß mit zunehmendem Lichtcodierwert LCW die optische Dichte D ebenfalls zunimmt. Die Druckkennlinie 104 kann jedoch auch einen anderen vorgegebenen Verlauf haben, um zusätzliche Freiheitsgrade für den Druckprozeß zu schaffen.

Ausgehend von der Druckkennlinie 104 können die korrigierten Belichtungsenergien HK mit Hilfe der im Vier-Quadranten-Diagramm angegebenen Zusammenhänge ermittelt werden. Im folgenden soll die Ermittlung der korrigierten Belichtungsenergien HK mit Hilfe einer grafischen Konstruktion erläutert werden. Diese Konstruktion wird jedoch im Druckgerät automatisch von einem Mikroprozessor durchgeführt, der die in einem Speicher des Druckgeräts gespeicherten Befehle eines Programms abarbeitet, mit dem die korrigierten Belichtungsenergien HK errechnet werden können.

Beispielsweise wird der korrigierte Belichtungsenergiewert HK9 zum Lichtcodierwert LCW=9 ausgehend vom durch die Druckkennlinie 104 festgelegten Wert der optischen Dichte D beim Lichtcodierwert LCW=9 ermittelt. Von diesem Wert der optischen Dichte D wird mit Hilfe der im Quadranten I dargestellten Entwicklungskennlinie 100 eine Spannung U ermittelt, vgl. Pfeile 120 und 122. Mit Hilfe des aus der Entwicklungskennlinie 100 ermittelten Potentialwertes U wird aus der Entladungskennlinie 102 eine Belichtungsenergie HK abgelesen, die als korrigierte Belichtungsenergie HK9 für den Lichtcodierwert LCW=9 verwendet wird, vgl. Pfeil 124.

Im Quadranten III werden die den Lichtcodierwerten LCW zugeordneten Belichtungsenergien H dargestellt. So gehört zum Lichtcodierwert LCW=9 die korrigierte Belichtungsenergie HK9 von etwa 0,6 $\mu$Ws/cm$^2$. Es ergibt sich somit für den Lichtcodierwert LCW=9 bei der Belichtungsenergie HK9=0,6 $\mu$Ws/cm$^2$ ein Punkt P1.

Werden auf die gleiche Art und Weise mit Hilfe des Vier-Quadranten-Diagramms die korrigierten Belichtungsenergien HK für die anderen Lichtcodierwerte LCW ermittelt, so ergibt sich im Quadranten III eine Codierkennlinie 106, die den Zusammenhang von Lichtcodierwerten LCW und korrigierten Belichtungsenergien HK angibt. Der Punkt P1 liegt auf der Codierkennlinie 106.

Wird beim Druckvorgang ein Fotoleiter mit der Entladungskennlinie 102a verwendet, so läßt sich der vorgegebene Verlauf der Druckkennlinie 104 dennoch erreichen, wenn die korrigierten Belichtungsenergien erneut festgelegt werden. Dies wird wiederum am Beispiel des Lichtcodierwertes LCW=9 erläutert. Ausgehend von der Druckkennlinie 104 wird der zum Lichtcodierwert LCW=9 gehörende Wert der optischen Dichte D ermittelt. Dieser Wert liegt bei etwa 1,8; vgl. Pfeil 120. Danach wird aus der Entwicklungskennlinie 100 zu diesem Wert der optischen Dichte D=1,8 das zugehörige Potential U abgelesen, vgl. Pfeil 122. Dieses Potential beträgt etwa 65 V, vgl. Pfeil 122. Anschließend wird aus der Kennlinie 102a zu dem so ermittelten Potential U=65 V die Belichtungsenergie H abgelesen. Es ergibt sich eine korrigierte Belichtungsenergie HK9 von etwa 0,3 $\mu$Ws/cm$^2$. Trägt man die so ermittelte korrigierte Belichtungsenergie HK9 im Quadranten III an einem Punkt P2 ein, so hat man einen ersten Punkt der Kennlinie 106a, die den Zusammenhang zwischen Lichtcodierwerten LCW und korrigierten Belichtungsenergien HK für den Fotoleiter mit der Kennlinie 102a angibt. Auf ähnliche Weise werden dann für die anderen Lichtcodierwerte LCW die korrigierten Belichtungsenergien HK ermittelt. Es ergibt sich der durch die Codierkennlinie 106a dargestellte Zusammenhang zwischen Lichtcodierwerten LCW und korrigierten Belichtungsenergien HK.

In einem weiteren Ausführungsbeispiel wird die Entwicklungskennlinie 100 zum Erzielen der Druckkennlinie 104 verändert, indem die Tonerkonzentration erhöht bzw. verringert wird. Dadurch ergeben sich neue Freiheitsgrade, die insbesondere dann genutzt werden, wenn die freie Wahl der korrigierten Belichtungsenergiewerte HK beschränkt ist.

Neben der in Fig. 6 gezeigten Druckkennlinie 104 gibt es auch eine Druckprozeßkennlinie (nicht dargestellt), die den Zusammenhang zwischen Belichtungsenergie H und optischer Dichte D angibt. Während die Druckprozeßkennlinie bereits festliegt, wenn die Entwicklungskennlinie 100 und die Entladungskennlinie 102 festgelegt sind, kann die Druckkennlinie 104 noch verändert werden. Beispielsweise wird wie oben erläutert für die Druckkennlinie 104 ein Verlauf vorgegeben. Die Druckkennlinie 104 wird damit gezielt verändert.

Bezugszeichenliste

| | |
|---|---|
| 10 | Druckgerät |
| 12 | Schnittstelle |
| 14 | Druckdaten |
| 16 | Druckdateneinheit |
| MP | Microprozessor |
| 18 | Speicher |
| 20 | Lichtcodierdaten |
| 22 | Zeichengenerator |

| | |
|---|---|
| LED | Light Emitting Diode |
| 0 bis 3 | Lichtcodierwerte |
| HB1 bis HB3 | Bezugs-Belichtungsenergie |
| 24 | Umwandlungs- und Korrektureinheit |
| K1 bis K3 | Korrekturfaktor |
| HK1 bis HK3 | korrigierte Belichtungsenergie |
| 26 | Lichtcodiersignal |
| 28 | Lichtenergieverteilung |
| 30 | Fotoleiter |
| 32 | Potentialwerte |
| 34 | Entwicklungseinheit |
| 36 | Tonerbereiche |
| 50 | Abszissenachse, Belichtungsenergie |
| 52 | Ordinatenachse, Fotoleiterpotential |
| KLB | Bezugskennlinie |
| KL1, KL2 | Kennlinie des Fotoleiters |
| KLB' | Bezugskennlinie |
| VLIM | tiefstes erreichbares Entladepotential |
| 54 | gestrichelte Linie |
| V1 bis V3 | Potential |
| V7 | Potential |
| HB7 | Bezugs-Belichtungsenergie |
| HK7 | korrigierte Belichtungsenergie |
| K7 | Korrekturfaktor |
| 56 | Speicher |
| H | Belichtungsenergie |
| T | Temperatur des Fotoleiters |
| K | Fotoleiterklasse |
| HS | standardmäßige Belichtungsenergie |
| 60 | Abszissenachse, Belichtungsenergie |
| 62 | Ordinatenachse, Potential |
| VC, VC1 | Aufladepotential |
| V1' bis V3' | vorgegebenes Potential |
| DAD | Discharged Area Development |
| CAD | Charged Area Development |
| VBias | Hilfspotential der Entwicklungsvorrichtung |
| 100 | Entwicklungskennlinie |
| 101 | Doppelpfeil |
| 102, 102a | Entladungskennlinie |
| 104 | Druckprozeßkennlinie |
| 106, 106a | Codierkennlinie |
| I bis IV | Quadrant |
| 110, 114 | Abszisse |
| 112, 116 | Ordinate |
| P1, P2 | Punkt |
| D | optische Dichte |
| LCW | Lichtcodierwerte |
| 120 bis 126 | Pfeil |
| U | Potential |

**Patentansprüche**

1. Verfahren zum Betreiben einer elektrofotografischen Druckoder Kopiervorrichtung (10), bei dem ein optischer Zeichengenerator (22) einen Fotoleiter (30) mittels mindestens einer Lichtquelle belichtet, aus Druckdaten (14) eines Druckbildes Lichtcodierdaten (20) erzeugt werden, die Lichtcodierdaten (20) jeweils einen von mindestens drei unterschiedlichen Lichtcodierwerten (0 bis 3) enthalten, die unterschiedlichen Bezugs-Belichtungsenergiewerten (HB1 bis HB3) zugeordnet sind,

die Bezugs-Belichtungsenergiewerte (HB1 bis HB3) zum Drucken verwendet werden, wenn der Fotoleiter (30) eine den Zusammenhang von Belichtungsenergie (H) und Potential auf dem Fotoleiter (30) angebende vorgegebene Bezugsentladungskennlinie hat,

in einem Abgleichsvorgang eine den Zusammenhang von Belichtungsenergie (H) und Potential (V) auf dem Fotoleiter (30) angebende Entladungskennlinie (KL1) beim Festlegen korrigierter Belichtungsenergien (HK1 bis HK7) berücksichtigt wird,

im Abgleichsvorgang für jeden Lichtcodierwert (0 bis 3) die vom Zeichengenerator (22) abzustrahlende korrigierte Belichtungsenergie (HK1 bis HK7) jeweils abhängig von einer Abweichung der Entladungskennlinie (KL1) von der Bezugsentladungskennlinie (KLB) bei einem Potential (V1) ermittelt wird, das zu der beim jeweiligen Lichtcodierwert (1) verwendeten Bezugsbelichtungsenergie (HB1) gemäß Bezugsentladungskennlinie (KLB) gehört, wobei der Wert der jeweiligen korrigierten Belichtungsenergie (HK1) um so mehr vom Wert der zum gleichen Lichtcodierwert (1) gehörenden Bezugsbelichtungsenergie (HB1) abweicht, je größer die Abweichung der Kennlinien (KLB, KL1) voneinander bei dem zum jeweiligen Lichtcodierwert (0 bis 3) gemäß Bezugsentladungskennlinie (KLB) gehörenden Potential (V1) ist.

2. Verfahren nach einem der vorhergehenden Ansprüche, **dadurch gekennzeichnet, daß** für jeden Lichtcodierwert jeweils (0 bis 3) ein Korrekturparameter (K1 bis K3) ermittelt wird, mit dessen Hilfe die korrigierten Belichtungsenergiewerte (HK1 bis HK7) für den betreffenden Lichtcodierwert (0 bis 3) berechnet werden.

3. Verfahren nach einem der vorhergehenden Ansprüche, **dadurch gekennzeichnet, daß** die Entladungskennlinie (KL1) vollständig oder punktuell erfaßt wird,

für jeden Lichtcodierwert (0 bis 3) ein Fotoleiterpotential (V1 bis V3) vorgegeben ist,

und daß jeweils für einen Lichtcodierwert (1) zu dem vorgegebenen Potential (V1) aus der Entladungskennlinie (KL1) die korrigierte Belichtungsenergie (HK1 bis HK7) ermittelt wird.

4. Verfahren nach Anspruch 1 oder 2, **dadurch gekennzeichnet, daß** die Entladungskennlinie (KL1) vollständig oder punktuell erfaßt wird,

für mindestens einen Lichtcodierwert (2) ein Fotoleiterpotential (V2) vorgegeben ist,

zu dem vorgegebenen Potential (V2) aus der Entladungskennlinie (KL1) eine korrigierte Belichtungsenergie (HK2) ermittelt wird,

und daß die korrigierten Belichtungsenergien für die anderen Lichtcodierwerte (1, 3) durch Abschätzungen ermittelt werden.

5. Verfahren nach Anspruch 3 oder 4, **dadurch gekennzeichnet, daß** ein mathematisches Modell für die Entladungskennlinie des Fotoleiters (30) verwendet wird.

6. Verfahren nach Anspruch 5, **dadurch gekennzeichnet, daß** folgendes Modell verwendet wird:

$$VD(K,T,H)=(VC-VLIM)\cdot\exp(-K\cdot T\cdot H)+VLIM, \tag{1}$$

wobei

VC      das Aufladepotential des Fotoleiters in Volt,
VD      das Entladepotential des Fotoleiters in Volt,
VLIM      das tiefste erreichbare Entladepotential in Volt,
H      die Belichtungsenergie in $\mu Ws/cm^2$,
T      die Fotoleitertemperatur in $^\circ C$,
K      die Fotoleiterklasse in $cm^2/(\mu Ws^\circ C)$ und
exp      die Exponentialfunktion ist.

7. Verfahren nach Anspruch 1, **dadurch gekennzeichnet, daß** die Entladungskennlinie (KL1) in mindestens einem Regel- oder Steuervorgang berücksichtigt wird, in welchem die korrigierte Belichtungsenergie (HK1 bis HK7) für einen Lichtcodierwert (1) so ermittelt wird, daß ein für den Lichtcodierwert (1) vorgegebenes Potential (V1) bzw. ein in der Nähe dieses Potentials (V1) liegendes Potential auf dem Fotoleiter bei einer Belichtung gemäß Lichtcodierwert (1) und zugehöriger korrigierter Belichtungsenergie (HK1) entsteht.

8. Verfahren nach einem der Ansprüche 1 bis 7, **dadurch gekennzeichnet, daß** eine den derzeitigen Zusammenhang von Potential auf dem Fotoleiter und Tonerablagerung angebende Entwicklungskennlinie beim Festlegen der korrigierten Belichtungsenergien (HK1 bis HK7) und/oder weiterer Druckparameter (VBias, VC) berücksichtigt wird.

9. Verfahren nach einem der vorhergehenden Ansprüche, **dadurch gekennzeichnet, daß** unter Verwendung der korrigierten Belichtungsenergien (HK1 bis HK3) mindestens eine Tonermarke auf den Fotoleiter (30) und/oder auf ein Trägermaterial aufgebracht wird,
daß die Tonerablagerung im Bereich der Tonermarke vorzugsweise mit einem optischen oder kapazitiven Meßsensor erfaßt wird,
und daß abhängig von der Tonerablagerung mindestens ein weiterer Druckparameter (VBias, VC) vorgegeben wird, der den Entwicklungsprozeß und/oder den Belichtungsprozeß beeinflußt.

10. Verfahren nach Anspruch 8 oder 9, **dadurch gekennzeichnet, daß** mehrere Tonermarken mit unterschiedlicher Rasterung aufgebracht werden,
und daß die Tonerablagerungen im Bereich der Tonermarken erfaßt werden.

11. Verfahren nach Anspruch 8, 9 oder 10, **dadurch gekennzeichnet, daß** der Sensor die Tonerablagerung im Bereich der Tonermarke integrierend erfaßt.

12. Verfahren nach einem der vorhergehenden Ansprüche, **dadurch gekennzeichnet, daß** nur ein Abschnitt der Belichtungskennlinie (KL1) und/oder der Entwicklungskennlinie berücksichtigt wird.

13. Verfahren nach einem der vorhergehenden Ansprüche, **dadurch gekennzeichnet, daß** der Abgleichsvorgang automatisch vorzugsweise nach dem Einschalten einer Druck- bzw. Kopiervorrichtung und/oder nach längeren Druckpausen und/oder nach längerem Druckbetrieb und/oder auf Anforderung einer Bedienperson durchgeführt wird.

14. Verfahren nach einem der vorhergehenden Ansprüche, **dadurch gekennzeichnet, daß** für jeden Lichtcodierwert (0 bis 3) ein Potentialwert (V1 bis V7) vorgegeben ist, der sich bei Belichtung gemäß dem jeweiligen Lichtcodiertwert (0 bis 3) auf dem Fotoleiter einstellen soll,
und daß als korrigierte Belichtungsenergie (HK1 bis HK7) für einen Lichtcodierwert (0 bis 3) der durch die Entladungskennlinie (KL1) bei dem für den Lichtcodierwert (0 bis 3) vorgegebenem Potential bestimmte Belichtungsenergiewert verwendet wird.

15. Verfahren nach einem der vorhergehenden Ansprüche, **dadurch gekennzeichnet, daß** zum Ermitteln eines korrigierten Belichtungswertes (HK1 bis HK7) der für den betreffenden Lichtcodierwert (0 bis 3) vorgegebene Bezugs-Belichtungsenergiewert (HB1 bis HB3) einbezogen wird.

16. Elektrofotografische Druck- bzw. Kopiervorrichtung (10),
mit einem optischen Zeichengenerator (22), der einen Fotoleiter (30) mittels mindestens einer Lichtquelle (LED) belichtet,
einer Druckdateneinheit (16), die aus den Druckdaten (14) eines Druckbildes Lichtcodierdaten (20) mit mindestens drei unterschiedlichen Lichtcodierwerten (0 bis 3) erzeugt, wobei die Lichtcodierwerte unterschiedlichen Bezugs-Belichtungsenergien (HB1 bis HB3) zugeordnet sind,
und wobei die Bezugs-Belichtungsenergiewerte (HB1 bis HB3) zum Drucken verwendet werden, wenn der Fotoleiter (30) eine den Zusammenhang von Belichtungsenergie (H) und Potential auf dem Fotoleiter (30) angebende vorgegebene Bezugsentladungskennlinie hat,
und mit einer Ansteuereinheit (22) zum Ansteuern der Lichtquelle (LED) abhängig von den Lichtcodierdaten (20),
**gekennzeichnet durch** eine Korrektureinheit (24), in der eine den Zusammenhang von Belichtungsenergie (H) und Potential (V) auf dem Fotoleiter (30) angebende Entladungskennlinie (KL1) beim Festlegen von korrigierten Belichtungsenergien (HK1 bis HK7) berücksichtigt wird,
und **dadurch**, daß die Korrektureinheit für jeden Lichtcodierwert (0 bis 3) die korrigierte Belichtungsenergie (HK1 bis H3) so ermittelt, daß der Wert der jeweiligen korrigierten Belichtungsenergie (HK1) um so mehr vom Wert der zum gleichen Lichtcodierwert (1) gehörenden Bezugsbelichtungsenergie (HB1) abweicht, je stärker die Entladungskennlinie (KL1) von der Bezugsentladungskennlinie (KLB) bei einem Potential (V1) abweicht, das zu der beim jeweiligen Lichtcodierwert (1) verwendeten Bezugsbelichtungsenergie (HB1) gemäß Bezugsentladungskennlinie (KLB) gehört,
und **dadurch**, daß die Ansteuereinheit (22) die Lichtquelle (LED) auch abhängig von den korrigierten Belichtungsenergien (HK1 bis HK7) ansteuert.

**Claims**

1. Method for operating an electrophotographic printer or copier device (10),
   wherein an optical character generator (22) illuminates a photoconductor (30) with at least on light source,
   light encoding data (20) are generated from print data (14) of a print image,
   the light encoding data (20) each contain one of at least three different light encoding vlaues (0 through 3) that are allocated to different reference illumination energy values (HB1 through HB3),
   the reference illumination energy values (HB1 through HB3) are employed for printing when the photoconductor (30) has a predetermined reference discharge characteristic indicating the relationship of illumination energy (H) and potential on the photoconductor (30),
   in a balancing process, a discharge characteristic (KL1) representing the relationship of illumination energy (H) and potential (V) on the photoconductor (30) is taken into consideration in the definition of corrected illumination energies (HK1 through HK7),
   in the balancing process, the corrected illumination energy (HK1 through HK7) to be emitted by the character generator (22) is determined for each light encoding value (0 through 3) dependent on a deviation of the discharge characteristic (KL1) from the reference discharge characteristic for a potential (V1) that belongs to the reference illumination energy (HB1) employed for the respective light encoding value (1) according to the reference discharge characteristic (KLB), with the value of the respective corrected illumination energy (HK1) deviating the more from the value of the reference illumination energy (HB1) belonging to the same light encoding value (1) the greater the deviation of the characteristics (KLB, KL1) from one another is for the potential (V1) belonging to the respective light encoding value (0 through 3) according to the reference discharge characteristic (KLB).

2. Method according to one of the preceding claims, **characterized in that** one corrrection parameter (K1 through K3) is determined for each light encoding value, the corrected illumination energy values (HK1 through HK7) for the light encoding value (0 through 3) concerned being calculated therewith.

3. Method according to one of the preceding claims, **characterized in that** the discharge characteristic (KL1) is determined completely or in points,
   a photoconductor potential (V1 through V3) is predetermined for each light encoding value (0 through 3),
   and **in that** the corrected illumination energy (HK1 through HK7) is respectively determined from the discharge characteristic (KL1) for a light encoding value (1) for the predetermined potential (V1).

4. Method according to claim 1 or 2, **characterized in that** the discharge characteristic (KL1) is determined completely or in points,
   a photoconductor potential (V2) is predetermined for at least one light encoding value (2),
   a corrected illumination energy (HK2) is determined from the discharge characteristic (KL1) for the predetermined potential (V2),
   and **in that** the corrected illumination energies for the other light encoding values (1, 3) are determined by estimates.

5. Method according to claims 3 or 4, **characterized in that** a mathematical model is employed for the discharge characteristic of the photoconductor (30).

6. Method according to claim 5, **characterized in that** the following model is employed:

$$VD(K,T,H) = (VC-VLIM) \cdot exp(-K \cdot T \cdot H)+VLIM,$$

wherein

VC      is the charge potential of the photoconductor in volts,
VD      is the discharge potential of the photoconductor in volts,
VLIM      is the lowest obtainable discharge potential in volts,
H      is the illumination energy in $\mu Ws/cm^2$,
T      is the temperature of the photoconductor in $^\circ C$,
K      is the photoconductor class in $cm^2$ ($\mu Ws^\circ C$), and

exp     is the exponential function.

7.  Method according to claim 1, **characterized in that** the discharge characteristic (KL1) is taken into consideration in at least one regulating or control process in which the corrected illumination energy (HK1 through HGK7) for a light encoding value (1) is determined such that a potential (V1) predetermined for the light encoding value (1) or, respectively, a potential lying close to this potential (V1) is generated on the photoconductor for an illumination according to the light encoding value (1) and appertaining corrected illumination energy (HK1).

8.  Method according to one of claims 1 through 7, **characterized in that** a development characteristic indicating the current relationship of potential on the photoconductor and toner deposit is taken into consideration in the determination of the corrected illumination energies (HK1 through HK7) and/or of further printing parameters (Vbias, VC).

9.  Method according to one of the preceding claims, **characterized in that** at least one toner mark is applied onto the photoconductor (30) and/or onto a carrier material using the corrected illumination energies (HK1 through HK3); **in that** the toner deposit in the region of the toner mark is detected, preferably with an optical or capacitive measuring sensor; and **in that** at least one further printing parameter (Vbias, VC) that influences the development process and/or the illumination process is predetermined dependent on the toner deposit.

10. Method according to claim 8 or 9, **characterized in that** a plurality of toner marks with different rastering are applied; and **in that** the toner deposits in the region of the toner marks are detected.

11. Method according to claim 8, 9 or 10, characterzied in that the sensor detects the toner deposit in the region of the toner mark in integrating fashion.

12. Method according to one of the preceding claims, **characterized in that** only a section of the illumination characteristic (KL1) and/or of the development characteristic is taken into consideration.

13. Method according to one of the preceding claims, **characterized in that** the balancing process is automatically implemented, preferably after a printer or, respectively, copier device is turned on and/or after longer printing pauses and/or after longer printer operation and/or on demand of an operator.

14. Method according to one of the preceding claims, **characterized in that** a potential value (V1 through V7) that is to occur on the photoconductor upon illumination according to the respective light encoding value (0 through 3) is predetermined for each light encoding value (0 through 3); and **in that** the illumination energy value determined by the discharge characteristic (KL1) for the potential predetermined for the light encoding value (0 through 3) is employed as corrected illumination energy (HK1 through HK7) for a light encoding value (0 through 3).

15. Method according to one of the preceding claims, **characterized in that** the reference illumination energy value (HB1 through HB3) predetermined for the light encoding value (0 through 3) concerned is included for the determination of a corrected illumination value (HK1 through HK7).

16. Electrophotographic printer or, respectively, copier device (10), with an optical character generator (22) that illuminates a photoconductor (30) with at least one light source (LED), a print data unit (16) that generates light encoding data (20) with at least three different light encoding values (0 through 3) from the print data (14) of a print image, wherein the light encoding values are allocated to different reference illumination energies (HB1 through HB3), and wherein the reference illumination energy values (HB1 through HB3) are employed for printing when the photoconductor (30) has a predetermined reference discharge characteristic indicating the relationship of illumination energy (H) and potential on the photoconductor (30), and with a drive unit (22) for driving the light source (LED) dependent on the light encoding data (20), **characterized by** a correction unit (24) in which a discharge characteristic (KL1) indicating the relationship of illumination energy (H) and potential (V) on the photoconductor (30) is taken into consideration in the determination of corrected illumination energies (HK1 through HK7); and in that the correction unit determines the corrected illumination energy (HK1 through HK7) for each light encoding value (0 through 3) such that the value of the respective corrected illumination energy (HK1) deviates the more from the value of the reference illumination energy (HB1) belonging to the same light encoding value (1) the greater the discharge characteristic (KL1) deviates from the reference discharge characteristic (KLB) for a potential (V1) that belongs to the reference illumination energy (HB1) employed for the respective light encoding value (1) according to the reference discharge characteristic (KLB),
and in that the drive unit (22) drives the light source (LED) also dependent on the corrected illumination energies (HK1 through HK7).

**Revendications**

1. Procédé d'exploitation d'un appareil d'impression ou de copie électrographique (10), dans lequel
   un générateur optique de caractères (22) éclaire un photoconducteur (30) au moyen d'au moins une source lumineuse,
   des données de codage de lumière (20) sont générées à partir de données d'impression (14) d'une image d'impression,
   les données de codage de lumière (20) contiennent chacune une parmi au moins trois valeurs de codage de lumière différentes (0 à 3) qui sont associées à différentes valeurs d'énergie d'éclairement de référence (HB1 à HB3),
   les valeurs d'énergie d'éclairement de référence (HB1 à HB3) sont utilisées pour l'impression lorsque le photoconducteur (30) a une courbe caractéristique de décharge de référence prédéterminée représentative de la relation entre l'énergie d'éclairement (H) et le potentiel sur le photoconducteur (30),
   dans un processus d'ajustement, une courbe caractéristique de décharge (KL1) représentative de la relation entre l'énergie d'éclairement (H) et le potentiel (V) sur le photoconducteur (30) est prise en considération lors de la détermination des énergies d'éclairement corrigées (HK1 à HK7),
   dans le processus d'ajustement, pour chaque valeur de codage de lumière (0 à 3), l'énergie d'éclairement corrigée (HK1 à HK7) rayonnée par le générateur de caractères (22) est déterminée à chaque fois en fonction d'une déviation de la courbe caractéristique de décharge (KL1) par rapport à la courbe caractéristique de décharge de référence (KLB) pour un potentiel (V1) qui est lié à l'énergie d'éclairement de référence (HB1) utilisé pour la valeur de codage de lumière (1) correspondante conformément à la courbe caractéristique de décharge de référence (KLB), la valeur de l'énergie d'éclairement corrigée (HK1) correspondante s'écartant d'autant plus de la valeur de l'énergie d'éclairement de référence (HB1) liée à la même valeur de codage de lumière (1), que la déviation des courbes caractéristiques (KLB, KL1) les unes des autres, lorsque le potentiel (V1) est lié à la valeur de codage de lumière (0 à 3) correspondante conformément à la courbe caractéristique de décharge de référence (KLB), est importante.

2. Procédé selon l'une des revendications précédentes, **caractérisé en ce qu'**il est déterminé pour chaque valeur de codage de lumière (0 à 3) un paramètre de correction (K1 à K3) au moyen duquel les valeurs d'énergie d'éclairement corrigées (HK1 à HK7) sont calculées pour la valeur de codage de lumière (0 à 3) en question.

3. Procédé selon l'une des revendications précédentes, **caractérisé en ce que** la courbe caractéristique de décharge (KL1) est déterminée totalement ou ponctuellement,
   **en ce qu'**un potentiel photoconducteur (V1 à V3) est prédéterminé pour chaque valeur de codage de lumière (0 à 3),
   et en ce l'énergie d'éclairement corrigée (HK1 à HK7) est à chaque fois déterminée à partir de la caractéristique de décharge (KL1) pour une valeur de codage de lumière (1) pour le potentiel prédéterminé (V1).

4. Procédé selon la revendication 1 ou 2, **caractérisé en ce que** la courbe caractéristique de décharge (KL1) est déterminée totalement ou ponctuellement,
   **en ce qu'**un potentiel de photoconducteur (V2) est prédéterminé pour au moins une valeur de codage de lumière (2),
   **en ce qu'**une énergie d'éclairement corrigée (HK2) est déterminée à partir de la courbe caractéristique de décharge (KL1) pour le potentiel prédéterminé (V2),
   et **en ce que** les énergies d'éclairement corrigées sont déterminées pour les autres valeurs de codage de lumière (1, 3) en effectuant des estimations.

5. Procédé selon la revendication 3 ou 4, **caractérisé en ce qu'**un modèle mathématique est utilisé pour la courbe caractéristique du photoconducteur (30).

6. Procédé selon la revendication 5, **caractérisé en ce qu'**il est utilisé le modèle suivant :

$$VD(K,T,H) = (VC - VLIM)\cdot exp\ (-K\cdot T\cdot H)+VLIM, \qquad (1)$$

où :

VC est le potentiel de charge du photoconducteur en volt,
VD est le potentiel de décharge du photoconducteur en volt,
VLIM est le potentiel de décharge le plus bas pouvant être atteint en volt,
H est l'énergie d'éclairement en $\mu Ws/cm^2$,
T est la température du photoconducteur en °C,
K est la classe du photoconducteur en $cm^2/(\mu Ws°C)$, et exp est la fonction exponentielle.

7. Procédé selon la revendication 1, **caractérisé en ce que** la courbe caractéristique de décharge (KL1) est prise en considération dans au moins un processus de régulation ou de commande, dans lequel l'énergie d'éclairement corrigée (HK1 à HK7) est déterminée pour une valeur de codage de lumière (1) de telle sorte qu'un potentiel (V1) prédéterminé pour une valeur de codage de lumière (1), ou un potentiel proche de ce potentiel (V1), est généré sur le photoconducteur pour un éclairement conformément à la valeur de codage de lumière (1) et une énergie d'éclairement corrigée (HK1) associée.

8. Procédé selon l'une des revendications 1 à 7, **caractérisé en ce qu'**une courbe caractéristique de développement représentative de la présente relation entre le potentiel sur le photoconducteur et le dépôt de toner est prise en considération lors de la détermination des énergies d'éclairement corrigées (HK1 à HK7) et/ou d'autres paramètres d'impression ($V_{polarisation}$, VC).

9. Procédé selon l'une des revendications précédentes, **caractérisé en ce qu'**au moins un repère de toner sur le photoconducteur (30) et/ou sur un matériau de support est déposé en utilisant les énergies d'éclairement corrigées (HK1 à HK3),
   **en ce que** le dépôt de toner dans la région du repère de toner est déterminé de préférence au moyen d'un capteur de mesure optique ou capacitif,
   et **en ce qu'**il est déterminé en fonction du dépôt de toner au moins un autre paramètre d'impression ($V_{polarisation}$, VC) qui influe sur le processus de développement et/ou le processus d'éclairement.

10. Procédé selon la revendication 8 ou 9, **caractérisé en ce que** plusieurs repères de toner sont déposés avec un tramage différent,
    et plusieurs dépôts de toner sont détectés dans la région des repères de toner.

11. Procédé selon la revendication 8, 9 ou 10, **caractérisé en ce que** le capteur détecte par intégration le dépôt de toner dans la région du repère de toner.

12. Procédé selon l'une des revendications précédentes, **caractérisé en ce que** seule une portion de la courbe caractéristique d'éclairement (KL1) et/ou de la courbe caractéristique de développement est prise en considération.

13. Procédé selon l'une des revendications précédentes, **caractérisé en ce que** le processus d'ajustement est effectué automatiquement, de préférence après la mise en route d'un appareil d'impression ou de copie et/ou après une pause d'impression plus longue et/ou après un mode d'impression plus long et/ou sur demande d'un opérateur.

14. Procédé selon l'une des revendications précédentes, **caractérisé en ce qu'**il est prédéterminé pour chaque valeur de codage de lumière (0 à 3) une valeur de potentiel (V1 à V7) qui doit être réglée lors de l'éclairement conformément à la valeur de codage de lumière (0 à 3) correspondante sur le photoconducteur,
    et **en ce qu'**il est utilisé comme énergie d'éclairement corrigée (HK1 à HK7) pour une valeur de codage de lumière (0 à 3) la valeur d'énergie d'éclairement déterminée par la courbe caractéristique de décharge (KL1) pour le potentiel prédéterminé pour la valeur de codage de lumière (0 à 3).

15. Procédé selon l'une des revendications précédentes, **caractérisé en ce que** la valeur d'énergie d'éclairement de référence (HB1 à HB3) prédéterminée pour la valeur de codage de lumière en question (0 à 3) est impliquée dans la détermination d'une valeur d'éclairement corrigée (HK1 à HK7).

16. Appareil d'impression ou de copie électrographique (10), comportant :

un générateur optique de caractères (22) qui éclaire un photoconducteur (30) au moyen d'au moins une source lumineuse (LED),

une unité de données d'impression (16), qui génère à partir des données d'impression (14) d'une image d'impression des données de codage de lumière (20) comportant au moins trois valeurs de codage de lumière différentes (0 à 3), les valeurs de codage de lumière étant associées à différentes énergies d'éclairement de référence (HB1 à HB3),

les valeurs d'éclairement de référence (HB1 à HB3) étant utilisées pour l'impression lorsque le photoconducteur (30) a une courbe caractéristique de décharge de référence prédéterminée représentative de la relation entre l'énergie d'éclairement (H) et le potentiel sur le photoconducteur (30),

et une unité de commande (22) pour commander la source de lumière (LED) en fonction des données de codage de lumière (20),

**caractérisé par** une unité de correction (24), dans laquelle une courbe caractéristique de décharge (KL1) représentativé de la relation entre l'énergie d'éclairement (H) et le potentiel (V) sur le photoconducteur (30) est prise en considération lors de la détermination de l'énergie d'éclairement corrigée (HK1 à HK7), et

**caractérisé en ce que** l'unité de correction détecte, pour chaque valeur de codage de lumière (0 à 3), l'énergie d'éclairement corrigée (HK1 à HK7), de telle sorte que la valeur de l'énergie d'éclairement corrigée correspondante (HK1) s'écarte d'autant plus de la valeur de l'énergie d'éclairement de référence (HB1) liée à la même valeur de codage de lumière (1), que la déviation de la courbe caractéristique de décharge (KL1) par rapport à la caractéristique de décharge de référence (KLB) est importante pour un potentiel (V1) qui est lié à l'énergie d'éclairement de référence (HB1) utilisée pour la valeur de codage de lumière (1) correspondante conformément à la courbe caractéristique de décharge de référence (KLB),

et **en ce que** l'unité de commande (22) commande la source lumineuse (LED) également en fonction des énergies d'éclairement corrigées (HK1 à HK7).

Informationsfluß im elektrofotografischen Druckprozeß

logische
Druckdaten

Controller
MP | RAM

μ-Pixel: logische
Lichtcodierdaten
Werte: 0,1,2,3

Lichtlevel-
Konverter
K1,K2,K3

μ-Pixel: physikalische
Lichtcodiersignale

Zeichengener.
+
Ansteuerung

μ-Pixel:
Lichtenergie-Verteilung

fotoelektrischer
Prozeß

μ-Pixel:
Potentialwerte

elektrofotograf.
Entwicklung

μ-Pixel: Tonerbild
auf Fotoleiter

Fig.1

EP 1 142 299 B1

Fig.2

EP 1 142 299 B1

**24**

**Werte**

| | |
|---|---|
| 3 | (30) 31 |
| 2 | (20) 21 |
| 1 | (10) 12 |
| 0 | 0 |

56

Fig.3

18

$$V_D(K,T,H) = (V_C - V_{LIM}) \cdot \exp(-K \cdot T \cdot H) + V_{LIM} \qquad [1]$$

$$K(V_D,T,H) = \frac{1}{T \cdot H} \cdot \ln\left(\frac{V_C - V_{LIM}}{V_D - V_{LIM}}\right) \qquad [2]$$

$$H(V_D,K,T) = \frac{1}{T \cdot K} \cdot \ln\left(\frac{V_C - V_{LIM}}{V_D - V_{LIM}}\right) \qquad [3]$$

mit:   $V_C$:   Fotoleiter–Aufladepotential in V

$V_D$:   Fotoleiter–Entladepotential in V

$V_{LIM}$: tiefstes erreichbares Entladepotential in V

H:   Belichtung in $\mu Ws/cm^2$

T:   Fotoleitertemperatur in °C

K:   Fotoleiter–Empfindlichkeitsfaktor in $cm^2/(\mu Ws\,°C)$

Fig.4

Fig.5

Fig.6

Photoconductor Drum:

—— high sensitive / 40°C

—— low sensitive / 20°C

EP 1 142 299 B1